# EUROPÄISCHE PATENTSCHRIFT

(11) **EP 3 114 510 B1**
(45) Veröffentlichungstag und Bekanntmachung des Hinweises auf die Patenterteilung: **12.02.2020**
(21) Anmeldenummer: 14824349.6
(22) Anmeldetag: 10.11.2014
(51) Int. Cl.: G02B 6/00, F21V 8/00

(54) **LICHTLEITELEMENT FÜR EINE LEUCHTEINHEIT**
LIGHT GUIDING ELEMENT FOR AN ILLUMINATION UNIT
ÉLÉMENT DE GUIDAGE DE LUMIÈRE POUR UNE UNITÉ D'ÉCLAIRAGE

(30) Priorität: 04.03.2014 AT 501612014
(43) Veröffentlichungstag der Anmeldung: 11.01.2017
(73) Patentinhaber: ZKW Group GmbH, 3250 Wieselburg (AT)
(72) Erfinder: FAFFELBERGER, Anton, A-3375 Krummnußbaum (AT); EICHINGER, Bernd, A-3375 Krummnussbaum (AT)
(74) Vertreter: Patentanwaltskanzlei Matschnig & Forsthuber OG
(86) Internationale Anmeldenummer: PCT/AT2014/050269
(87) Internationale Veröffentlichungsnummer: WO 2015/131212

(56) Entgegenhaltungen:
- DE-A1-102012 202 508
- US-A1- 2013 201 708
- US-A1- 2013 314 946

## Beschreibung

Die Erfindung betrifft ein Lichtleitelement für eine Leuchteinheit, umfassend einen Lichtleitkörper mit zumindest einer Lichteintrittsfläche und zumindest einer Lichtaustrittsfläche.

Des Weiteren betrifft die Erfindung eine Leuchteinheit, insbesondere einen Kraftfahrzeugscheinwerfer, mit zumindest einem erfindungsgemäßen Lichtleitelement. Ein zusätzlicher Aspekt der Erfindung betrifft Kraftfahrzeug mit zumindest einer erfindungsgemäßen Leuchteinheit.

Lichtleitelemente haben die Aufgabe Licht von zumindest einer Lichteintrittsfläche hin zu zumindest einer Lichtaustrittsfläche zu lenken. Dabei wird Licht bei dem Übergang in das Lichtleitelement sowie aus dem Lichtleitelement heraus in Abhängigkeit von dem Ein- und Austrittswinkel sowie der Brechungsindizes der Medien, an denen der Eintritt und Austritt von Licht erfolgt, abgelenkt. Diese Ablenkung beeinflusst die Lichtverteilung in dem Lichtleitelement sowie das Lichtbild, das durch ein Lichtleitelement erzeugt wird. Dies führt dazu, dass durch Lichtleitelemente erzeugte Lichtbilder deutliche Inhomogenitäten aufweisen können, die die Funktion des Lichtleitelements unter Umständen beeinträchtigen, z.B. dann, wenn das Lichtleitelement einen Bestandteil einer optischen Signaleinrichtung bildet, wie beispielsweise einen Fahrtrichtungsanzeiger ("Blinker"), Tagfahrleuchten oder Positionslichter oder aber Licht durch das Lichtleitelement in einen Fahrzeuginnenraum abgestrahlt werden soll und dabei eine gleichmäßige Leuchtdichteverteilung von Bedeutung ist.

Die Druckschrift JP 2011 076858 offenbart eine Leuchteinheit mit einem Lichtleitelement und einem als Leuchstab ausgebildeten lichteinkoppelnden Element.

Die Druckschrift DE 10 2012 202508 offenbart ebenfalls eine Leuchteinheit mit einem Lichtleitelement und einem lichteinkoppelnden Element.

Es ist daher eine Aufgabe der Erfindung eine Leuchteinheit mit einem Lichtleitelement zu schaffen, mit welchem die Nachteile des Standes der Technik überwunden werden können und welches eine homogene Lichtverteilung bzw. ein homogenes Lichtbild des durch das Lichtleitelement abgestrahlten Lichtes ermöglicht.

Diese Aufgabe wird mit einer Leuchteinheit gemäß Anspruch 1 gelöst, mit einem Lichtleitelement bei welchem erfindungsgemäß die zumindest eine Lichteintrittsfläche eine Mehrzahl zumindest in Lichtausbreitungsrichtung zueinander versetzte Eintrittsteilflächen aufweist, wobei die Eintrittsteilflächen im Wesentlichen normal zur Lichtausbreitungsrichtung orientiert sind. Dank der Erfindung ist es möglich, ein Lichtleitelement zu schaffen, dass unerwünschte durch Lichtbrechung verursachte Inhomogenitäten und Änderung der Ausbreitungsrichtung des Lichtbildes vorbeugt, einfach und kostengünstig herstellbar und zudem äußert robust ist und trotzdem Verläufe der Lichteintrittsfläche zulässt, die von einem **Normalverlauf** zur Lichtausbreitungsrichtung abweichen.

Unter dem Ausdruck "im Wesentlichen normal zur Lichtausbreitungsrichtung orientiert" wird im Rahmen dieser Offenbarung verstanden, dass die Orientierung zur Lichtausbreitungsrichtung zumindest zwischen 85° und 95°, vorzugsweise 88° und 92° beträgt. Die Lichtausbreitungsrichtung entspricht dabei der Hauptausbreitungsrichtung des Lichtes in dem Lichtleitelement, insbesondere der Richtung einer optischen Achse. Die Eintrittsteilflächen dienen natürlich dem Eintritt von Licht in das Lichtleitelement und sind als ebene Flächen ausgebildet. Der Versatz kann in positiver wie negativer x-Richtung ausgestaltet sein; dies kann sich nach dem Verlauf einer 3D-Trägerlinie richten.

Vorzugsweise kann es vorgesehen sein, dass benachbarte Eintrittsteilflächen aneinander angrenzen. Darunter ist nicht zu verstehen, dass die benachbarten Eintrittsteilflächen einander berühren (dies ist aufgrund des Versatzes in Lichtausbreitungsrichtung nicht möglich), sondern vielmehr bedeutet dies, dass benachbarte Eintrittsteilflächen so angeordnet sind, dass Projektionen benachbarter Eintrittsteilflächen in eine parallel zu den Eintrittsteilflächen orientierte Ebene einander berühren würden. Dadurch ist eine besonders effiziente Anordnung der Eintrittsteilflächen gegeben.

Insbesondere kann es vorgesehen sein, dass benachbarte Eintrittsteilflächen in Lichtausbreitungsrichtung zueinander versetzt sind. Die Eintrittsteilflächen sind allesamt im Wesentlichen normal zur Lichtausbreitungsrichtung orientiert und folglich ebenso im Wesentlichen parallel zueinander ausgerichtet. Eine zur Eintrittsteilfläche normal orientierte Achse ist daher im Wesentlichen parallel zur Lichtausbreitungsrichtung orientiert. Vorzugsweise sind alle zueinander benachbarten Eintrittsteilflächen in Lichtausbreitungsrichtung zu den benachbarten Eintrittsteilflächen versetzt. Dadurch können in Bezug auf die Lichtausbreitungsrichtung schräg verlaufende Lichteintrittsflächen (bzw. beliebige 3D-Kurvenzüge) durch eine Mehrzahl von im Wesentlichen normal zur Lichtausbreitungsrichtung orientierten einzelnen Eintrittsteilflächen besonders einfach und gleichzeitig formgenau ausgestaltet werden.

Eine Eintrittsteilfläche ist grundsätzliche eine im Wesentlichen normal zur Lichtausbreitungsrichtung orientierte ebene Fläche, die durch angrenzende Flächen, beispielsweise Wandflächen, begrenzt ist, wobei sich die Lichteintrittsfläche aus der Summe der Eintrittsteilflächen zusammensetzt.

Vorzugsweise kann es vorgesehen sein, dass benachbarte Austrittsteilflächen aneinander angrenzen. Darunter ist nicht zu verstehen, dass die benachbarten Austrittsteilflächen einander berühren (dies ist aufgrund des Versatzes in Lichtausbreitungsrichtung nicht möglich), sondern vielmehr bedeutet dies, dass benachbarte Austrittsteilflächen so angeordnet sind, dass Projektionen benachbarter Austrittsteilflächen in eine parallel zu den Austrittsteilflächen orientierte Ebene einander berühren. Dadurch ist eine besonders effiziente Anordnung der Austrittsteilflächen gegeben.

Insbesondere kann es vorgesehen sein, dass benachbarte Austrittsteilflächen in Lichtausbreitungsrichtung zueinander versetzt sind. Vorzugsweise sind alle zueinander benachbarten Austrittsteilflächen in Lichtausbreitungsrichtung zu den benachbarten Austrittsteilflächen versetzt. Dadurch können in Bezug auf die Lichtausbreitungsrichtung schräg verlaufende Lichtaustrittsflächen durch eine Mehrzahl von im Wesentlichen normal zur Lichtausbreitungsrichtung orientierten einzelnen Austrittsteilflächen besonders einfach und gleichzeitig formgenau ausgestaltet werden.

Eine Austrittsteilfläche ist grundsätzlich eine im Wesentlichen normal zur Lichtausbreitungsrichtung orientierte ebene Fläche, die durch angrenzende Flächen, beispielsweise Wandflächen begrenzt ist, wobei sich die Lichtaustrittsfläche aus der Summe der Austrittsteilflächen zusammensetzt. Grundsätzlich wäre es auch denkbar, dass die Austrittsteilflächen nicht exakt eben ausgeführt sind sondern z.B. eine geringfügige Krümmung aufweisen. Wichtig ist dabei, dass die Abweichung von einer exakt ebenen Form nicht dergestalt ausgeprägt ist, sodass keine im Wesentlichen normale Ausrichtung der Austrittsteilflächen zur Lichtausbreitungsrichtung möglich ist.

Um unerwünschte Ablenkungen des Lichtes bei dem Austritt aus dem Lichtleitelement durch die Lichtaustrittsfläche vorzubeugen, kann es vorgesehen sein, dass die zumindest eine Lichtaustrittsfläche eine Mehrzahl zumindest in Lichtausbreitungsrichtung zueinander versetzte Austrittsteilflächen aufweist, wobei die Austrittssteilflächen im Wesentlichen normal zur Lichtausbreitungsrichtung orientiert sind. Dies verbessert die Homogenität des durch das Lichtleitelement abgestrahlten Lichtbildes, insbesondere bei Lichtaustrittsflächen, die zumindest teilweise Schräg zur Lichtausbreitungsrichtung orientiert sind.

Günstigerweise kann es vorgesehen sein, dass aneinander angrenzende Eintrittsteilflächen mittels parallel zur Lichtausbreitungsrichtung orientierten Wandflächen zueinander versetzt sind. Diese Orientierung der Wandflächen vermindert unerwünschte Ablenkungen oder Reflexionen an den Wandflächen, sodass auf das Lichtleitelement gerichtetes Licht besonders effizient durch die Lichteintrittsfläche in das Lichtleitelement eingekoppelt werden kann. In der Praxis können aus fertigungstechnischen Gründen auch Auszugsschrägen mit einem Winkeln mit bis zu 2° in Bezug auf die Ausbreitungsrichtung
Auch kann es vorgesehen sein, dass aneinander angrenzende Austrittsteilflächen mittels parallel zur Lichtausbreitungsrichtung orientierten Wandflächen zueinander versetzt sind. Diese Orientierung der Wandflächen vermindert unerwünschte Ablenkungen oder Reflexionen an den Wandflächen, sodass das aus dem Lichtleitelement durch die Lichtaustrittsfläche austretende Licht besonders effizient und homogen abgestrahlt werden kann.

In einer günstigen Variante der Erfindung können einzelne oder alle Wandflächen im Wesentlichen horizontal orientiert sein, wodurch sich komplexe Formen der Lichteintritts- und/oder der Lichtaustrittsflächen bilden lassen. Der Ausdruck "einzelne Wandflächen" bezeichnet im Allgemeinen eine Anzahl an Wandflächen, wobei diese Anzahl eins, zwei, drei oder mehr als drei betragen kann.

Alternativ dazu können einzelne oder alle Wandflächen im Wesentlichen vertikal orientiert sein. Dadurch ist es beispielsweise möglich, eine horizontale Abschrägung der Lichteintritts-und/oder der Lichtaustrittsflächen in Bezug auf die Lichtausbreitungsrichtung zu realisieren, wie dies beispielsweise bei Kraftfahrzeugscheinwerfern in einem modernen Fahrzeug aufgrund der Keilform der Fahrzeugfront typischerweise vorgesehen ist.

In einer anderen Variante der Erfindung kann es wiederum vorgesehen sein, dass einzelne oder alle Wandflächen im Wesentlichen normal zu einer Normalprojektion einer Trägerkurve orientiert sind, wobei die Normalprojektion der Trägerkurve in eine in Bezug auf die Lichtausbreitungsrichtung (-x) normal orientierte Ebene erfolgt. Das Lichtleitelement ist dabei so geformt, dass dieses dem Verlauf der Trägerkurve folgt bzw. die Trägerkurve in dem Lichtleitelement aufgenommen ist. Die Trägerkurve muss nicht zwingend einer Ebene liegen sondern kann grundsätzlich einen beliebigen Verlauf aufweisen.

Die Angaben horizontal, vertikal und diagonal beziehen sich dabei auf eine typische Einbaulage des Lichtleitelements, in der die Lichtausbreitungsrichtung in horizontaler Richtung erfolgt. Dies schließt nicht aus, dass das Lichtleitelement auch so verbaut werden kann, dass eine Lichtausbreitungsrichtung z.B. vertikal ausgerichtet ist.

In einer andren Weiterbildung der Erfindung kann vorgesehen sein, dass durch die Wandflächen eine würfelförmige Struktur ausgebildet ist. Dadurch wird die Ausbildung von sowohl in horizontaler Richtung als auch in vertikaler Richtung geschrägten Lichteintritts- und/oder Lichtaustrittsflächen ermöglicht.

Um die Homogenität des Lichtbildes des durch das Lichtleitelements abgestrahlten Lichtes zusätzlich zu erhöhen, kann es vorgesehen sein, dass die an dem Übergang der Wandfläche zur Eintritts- und/oder Austrittsteilfläche ausgebildete Kanten abgerundet sind, wobei die Abrundung einen Radius zwischen 0,05 und 0,3 mm, vorzugsweise 0,15mm aufweist. Auf die Abrundung auftreffendes Licht wird auf diese Weise gestreut, wodurch beispielsweise die Übergänge zwischen den einzelnen Wandflächen im Lichtbild des Lichtleitelements nicht sichtbar sind.

Um ungewünschte Ablenkungen der in das Lichtleitelement eintretenden und aus dem Lichtleitelement austretenden Lichtstrahlen zu vermeiden, kann es vorgesehen sein, dass die Austrittsteilflächen im Wesentlichen parallel zu den Eintrittsteilflächen orientiert sind. Der Ausdruck "im Wesentlichen parallel" bedeutet dabei, dass die Orientierung maximal in einem Winkel von 5° voneinander abweichen, bevorzugt 3°, besonders bevorzugt 2°.

Um eine ausreichend feine Abstufung der Lichteintrittsfläche zu ermöglichen, kann es vorgesehen sein, dass die Eintrittsteilflächen eine Erstreckung in horizontaler Richtung von maximal 2,5 mm aufweisen, vorzugsweise zwischen 1 mm und 2,5 mm.

Um eine ausreichend feine Abstufung der Lichtaustrittsfläche zu ermöglichen, kann es vorgesehen sein, dass die Austrittsteilflächen eine Erstreckung in horizontaler Richtung von maximal 2,5 mm aufweisen, vorzugsweise zwischen 1 mm und 2,5 mm. Dadurch können horizontale Abschrägungen der Lichtaustrittsfläche des Lichtleitelements besonders fein und damit für einen Betrachter kaum sichtbar aufgelöst werden.

Auch kann es vorgesehen sein, dass die Eintrittsteilflächen eine Erstreckung in vertikaler Richtung von maximal 2,5 mm aufweisen, vorzugsweise zwischen 1 mm und 2,5 mm und/oder dass die Austrittsteilflächen eine Erstreckung in vertikaler Richtung von maximal 2,5 mm aufweisen, vorzugsweise zwischen 1 mm und 2,5 mm.

Vorteilhafterweise kann der Lichtkörper als Vollkörper ausgeführt sein, wodurch ein kostengünstiger und robuster Aufbau des Lichtleitelements geschaffen wird.

Insbesondere kann der Lichtkörper aus Polycarbonat und/oder Polymethylmethacrylat bestehen, da diese Materialen besonders vorteilhafte Lichtleiteigenschaften aufweisen.

Das erfindungsgemäße Lichtleitelement ist in einer Leuchteinheit, insbesondere in einem Kraftfahrzeugscheinwerfer, verbaut wobei die Leuchteinheit zumindest ein lichteinkoppelndes Element, einen Leuchtstab, aufweist, das vor der Lichteintrittsfläche des Lichtleitelements angeordnet ist. Dabei bedeute eine Anordnung "vor der Lichteintrittsfläche", dass das lichteinkoppelnde Element entgegen der Lichtausbreitungsrichtung des Lichtleitelements in unmittelbarer Nähe zu dem Lichtleitelement angeordnet ist, sodass Licht durch das lichteinkoppelnde Element in die Lichteintrittsfläche des Lichtleitelements eingekoppelt werden kann. Das lichteinkoppelnde Element kann Lichtquellen aufweisen oder aber durch Lichtquellen gespeist werden. Solche Lichtquellen können beispielsweise LEDs sein.

In einem weiteren Aspekt betrifft die Erfindung Kraftfahrzeug mit zumindest einer erfindungsgemäßen Leuchteinheit.

Im Folgenden ist die Erfindung anhand der in den Figuren gezeigten, beispielhaften und nicht einschränkenden Ausführungsformen näher erörtert. Darin zeigt
Fig. 1 eine schematische Darstellung eines Lichtleitelements gemäß dem Stand der Technik,
Fig. 2 eine schematische Darstellung eines Lichtleitelements gemäß einer ersten Ausführungsform der Erfindung,
Fig. 3 eine perspektivische Darstellung eines Lichtleitelements gemäß einer zweiten Ausführungsform der Erfindung,
Fig. 3a eine Vorderansicht des Lichtleitelements gemäß der zweiten Ausführungsform der Erfindung,
Fig. 4 eine perspektivische Rückansicht eines Lichtleitelements gemäß einer dritten Ausführungsform der Erfindung mit einem vorgeschalteten Leuchtstab,
Fig. 5 eine Draufsicht auf ein Lichtleitelement gemäß der Erfindung mit eingezeichneten Strahlengang der Lichtstrahlen,
Fig. 6 einen Ausschnitt der Lichteintrittsfläche des Lichtleitelements gemäß der dritten Ausführungsform der Erfindung,
Fig. 7 einen Ausschnitt der Lichtaustrittsfläche des Lichtleitelements gemäß der dritten Ausführungsform der Erfindung und
Fig. 8 zeigt eine Draufsicht auf die Lichteintrittsteilflächen 2a des Lichtleitelements 1 gemäß der dritten Ausführungsform der Erfindung.

Im Folgenden bezeichnen - sofern nicht anders angegeben - gleiche Bezugszeichen die gleichen Merkmale, die zudem gleiche Eigenschaften aufweisen.

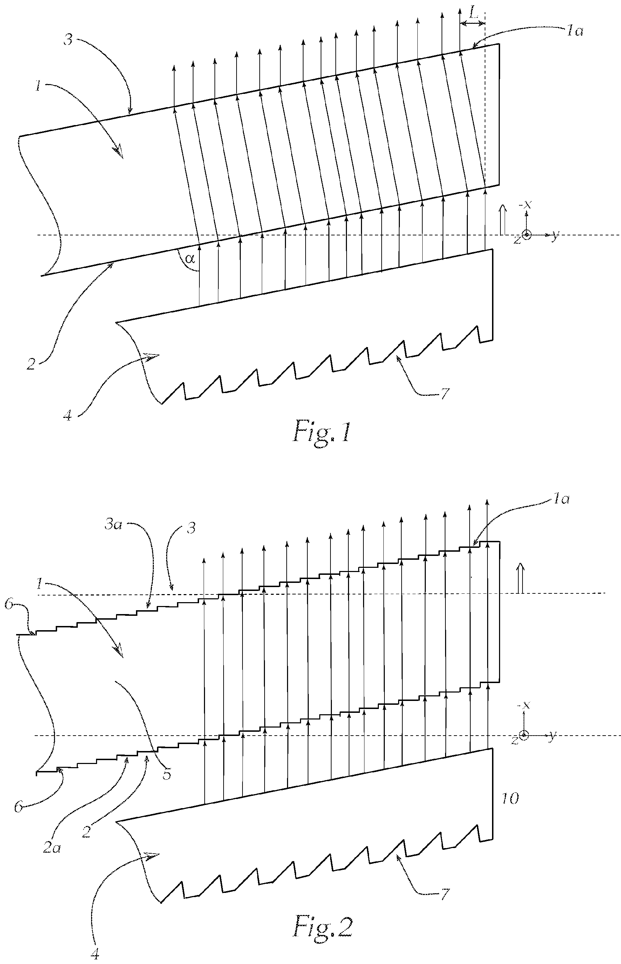

Die Figur 1 zeigt eine schematische Darstellung eines Lichtleitelements 1 gemäß dem Stand der Technik. Das Lichtleitelements 1 weist eine Lichteintrittsfläche 2 und eine Lichtaustrittsfläche 3 auf, wobei dem Lichtleitelement 1 ein lichteinkoppelndes Element 4 vorgeschaltet ist. Die Lichtstrahlen werden von dem lichteinkoppelnden Element 4 in Richtung einer Lichtausbreitungsrichtung -x (in den Figuren ist ein rechtswendiges kartesisches Koordinatensystem gewählt worden, bei welchem die x-Achse entgegen der Fahrtrichtung eines Fahrzeuges und die z-Achse vertikal orientiert ist) einer optischen Achse, die beispielsweise in Richtung einer Fahrzeuglängsachse orientiert ist) über die Lichteintrittsfläche 2 in das Lichtleitelement 1 eingekoppelt, wobei die Lichtstrahlen dabei in einem von 90° abweichen Winkel a, beispielsweise α = 80°, auf die Lichteintrittsfläche 2 auftreffen - die Lichteintrittsfläche 2 in dem gezeigten Beispiel daher in Bezug auf eine normal zur Lichtausbreitungsrichtung orientierte Ebene um 10° geneigt ist. Bei dem Übergang zwischen unterschiedlichen optischen Medien mit voneinander abweichender optischer Dichte (bzw. Brechungsindizes) werden Lichtstrahlen, die nicht senkrecht auf eine zwischen den Medien liegende Grenzfläche auftreffen, gemäß den Gesetzen der Physik abgelenkt. In dem vorliegenden Beispiel gemäß Figur 1 werden die Lichtstrahlen bei dem Eintritt in das Lichtleitelement 1 zum Lot und bei dem Austritt aus dem Lichtleitelement 1 vom Lot gebrochen. Da die Lichtaustrittsfläche 3 parallel zur Lichteintrittsfläche 2 orientiert ist und von dem gleichen Medium umgeben sind, stimmt der Grad der Ablenkung der Lichtstrahlen bei dem Eintritt in der Lichtleitelement 1 mit dem Grad der Ablenkung bei dem Austritt aus dem Lichtleitelement 1 überein. Folglich sind die Strahlen nach dem Austritt aus dem Lichtleitelement 1 gleich orientiert wie vor dem Eintritt in das Lichtleitelement 1, wobei die Lichtstrahlen dabei um die Länge L versetzt wurden. Dieser Versatz führt dazu, dass das Lichtleitelement 1 einen abgedunkelten Bereich 1a aufweist, der von den eintretenden Lichtstrahlen nicht erfasst wird und deshalb dunkel erscheint. Diese Inhomogenität im Lichtbild des Lichtleitelements 1 ist nachteilig und hinsichtlich vieler Funktionen, zu denen Lichtleitelemente ansonsten eingesetzt werden könnten, problematisch.

Figur 2 zeigt eine schematische Darstellung eines Lichtleitelements 1 gemäß einer ersten Ausführungsform der Erfindung. Das Lichtleitelement 1 umfasst dabei einen Lichtleitkörper 5, wobei dieser Körper vorzugsweise als transparenter Vollkörper ausgeführt ist, der beispielsweise Polycarbonat und oder Polymethylmethacrylat aufweisen kann. Das Lichtleitelement 1 weist eine Lichteintrittsfläche 2 und eine der Lichteintrittsfläche 2 gegenüberliegende Lichtaustrittsfläche 3 auf. Im Gegensatz zu den Lichteintritts- und Austrittsflächen des Standes der Technik, weist die Lichteintrittsfläche 2 eine Mehrzahl einzelner Eintrittsteilflächen 2a und die Lichtaustrittsfläche 3 eine Mehrzahl einzelner Austrittsteilflächen 3a auf, die zumindest in Lichtausbreitungsrichtung -x zueinander versetzt sind, wobei sowohl die Eintrittsteilflächen 2a als auch die Austrittsteilflächen 3a im Wesentlichen normal zur Lichtausbreitungsrichtung -x orientiert sind. Unter dem Ausdruck "eine Mehrzahl" wird dabei eine Anzahl von zumindest zwei verstanden, vorzugweise zumindest drei, vier oder auch deutlich mehr, beispielsweise zumindest zehn, zwanzig oder mehr als dreißig Eintritts- und/oder Austrittsteilflächen 2a und 3a.

Benachbarte Austrittsteilflächen 3a grenzen dabei aneinander an, wobei diese in Lichtausbreitungsrichtung -x zueinander versetzt sind. Der Versatz erfolgt über parallel zur Lichtausbreitungsrichtung -x orientierte Wandflächen 6. Analog zu Figur 1 wird in dem gezeigten Beispiel über ein lichteinkoppelndes Element 4 in die Lichteintrittsfläche 2 des Lichtkörpers 5 eingekoppelt und über die Lichtaustrittsfläche 3 (bzw. die Eintritts die Austrittsteilflächen 3a) Licht durch das Lichtleitelement 1 abgestrahlt. Die im Wesentlichen normal zur Lichtausbreitungsrichtung -x orientierten Eintritts- und Austrittsteilflächen 2a und 3a bewirken, dass in den Lichtkörper 5 des Lichtleitelements 1 eintretende Lichtstrahlen normal auf die jeweiligen Flächen auftreffen und daher nicht abgelenkt werden. Dies führt zu einer gleichmäßigen Lichtverteilung in dem Lichtkörper 5 und verhindert unerwünschte Ablenkungen bei der Ausbreitung in dem Lichtleitelement 1. Im Gegensatz zu dem Lichtleitelement 1 gemäß Fig. 1 ist nun der Bereich 1a gleichmäßig und hell ausgeleuchtet. Das dem Lichtleitelement 1 vorgeschaltete lichteinkoppelnde Element 4 weist zum Zwecke der Ablenkung von Lichtstrahlen hin zur Lichteintrittsfläche 2 typischerweise lichtstreuende Elemente 7, insbesondere Umlenkprismen, auf.

In der Ausführungsform gemäß der Fig. 2 sind die Wandflächen 6 im Wesentlichen vertikal orientiert. Dadurch ist es möglich, die Lichteintrittsfläche 2 in horizontaler Richtung schräg auszuführen. Dies gilt gleichermaßen für die Lichtaustrittsflächen 3. Solche Abschrägungen sind insbesondere bei Lichtleitelementen 1 von Bedeutung, die in unterschiedlichsten geometrischen Formen gestaltet werden müssen, um beispielsweise Designvorgaben zu entsprechen und/oder ein bestimmtes Design anderer mit dem Lichtleitelement 1 in Eingriff stehenden Modulen zu ermöglichen. Beispielsweise kann bei einem in einem Kraftfahrzeugscheinwerfer eingebauten Lichtleitelement 1 eine Abschrägung in Fahrtrichtung vorgesehen sein (da die Fahrzeugfronten moderner Kraftfahrzeuge häufig eine Keilform aufweisen, sind die Fahrzeugscheinwerfer nicht mehr normal sondern Schräg zur Fahrtrichtung orientiert), wobei die Lichtstrahlen typischerweise trotzdem in Fahrtrichtung abgestrahlt werden müssen. In solchen Fällen ist es daher notwendig, die Lichteintrittsfläche 2 sowie die Lichtaustrittsfläche 3 schräg zur Lichtausbreitungsrichtung -x zu orientieren. Aufgrund der zueinander in Richtung der Lichtausbreitungsrichtung -x versetzten und im Wesentlichen normal zur Lichtausbreitungsrichtung -x orientierten Teilflächen 2a und 3a ist es möglich, die Lichteintrittsfläche 2 und die Lichtaustrittsfläche 3 schräg zur Lichtausbreitungsrichtung -x auszuführen (indem die jeweilige Fläche 2 oder 3 eine Mehrzahl einzelner zueinander versetzter Teilflächen 2a bzw. 3a aufweist) und dabei gleichzeitig unerwünschte Ablenkungen von Lichtstrahlen zu vermeiden.

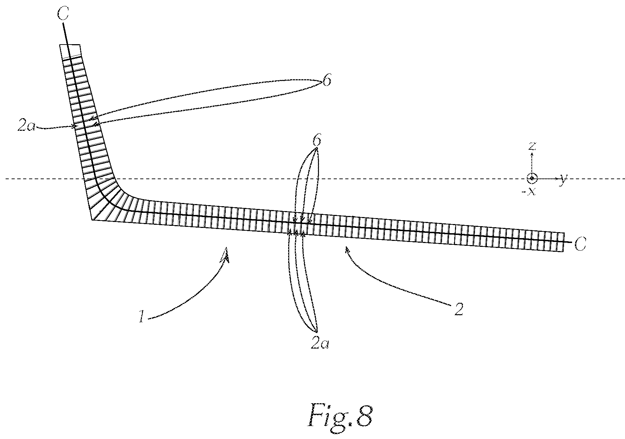

In der ersten Ausführungsform der Erfindung sind die Wandflächen 6 vertikal orientiert, wodurch sich eine horizontale Schrägung der Lichteintritts- und Lichtaustrittsfläche 2 und 3 in einfacher Weise implementieren lässt. Alternativ dazu könnten die Wandflächen 6 auch horizontal orientiert sein, wodurch eine Abschrägung in vertikaler Richtung realisiert werden kann. Die Ausgestaltung der Lichteintrittsfläche 2 muss nicht zwingend mit der Ausgestaltung der Lichtaustrittsfläche 3 übereinstimmen. Auch könnten die Wandflächen 6 diagonal - also weder horizontal noch vertikal - orientiert sein. Ebenso können die Wandflächen 6 im Wesentlichen normal zu einer Normalprojektion einer 3D-Trägerkurve C in eine durch die Achsen z und y aufgespannte Ebene orientiert sein, die in Fig. 8 dargestellt ist. Die Trägerkurve C ist innerhalb des Lichtleitelements 1 aufgenommen, wobei die Form des Lichtleitelements 1 dem Verlauf der Trägerkurve C folgt. Die an dem Übergang der jeweiligen Wandfläche 6 zur Eintritts- und/oder Austrittsteilfläche 2a und 3a ausgebildete Kanten sind vorzugsweise abgerundet, wobei die Abrundung einen Radius zwischen 0,05 und 0,3 mm, vorzugsweise 0,15 mm aufweist. Um eine möglichst feine Abstufung einer Abschrägung realisieren zu können, kann es vorgesehen sein, dass die Eintrittsteilteilflächen und/oder Austrittsteilflächen 2a, 3a eine Erstreckung in horizontaler Richtung von maximal 2,5 mm, vorzugsweise zwischen 1 mm und 2,5 mm, aufweisen.

Das Lichtleitelement 1 weist eine lichtführende Außenfläche 8 auf, die sich von der Lichteintrittsfläche 2 hin zur Lichtaustrittsfläche 3 erstreckt. Wiewohl in Figur 2 nur eine Seite der Außenfläche 8 erkennbar ist, wird durch die Außenfläche 8 grundsätzlich die gesamte zwischen der Lichteintritts- und der Lichtaustrittsfläche 2, 3 liegende Fläche repräsentiert.

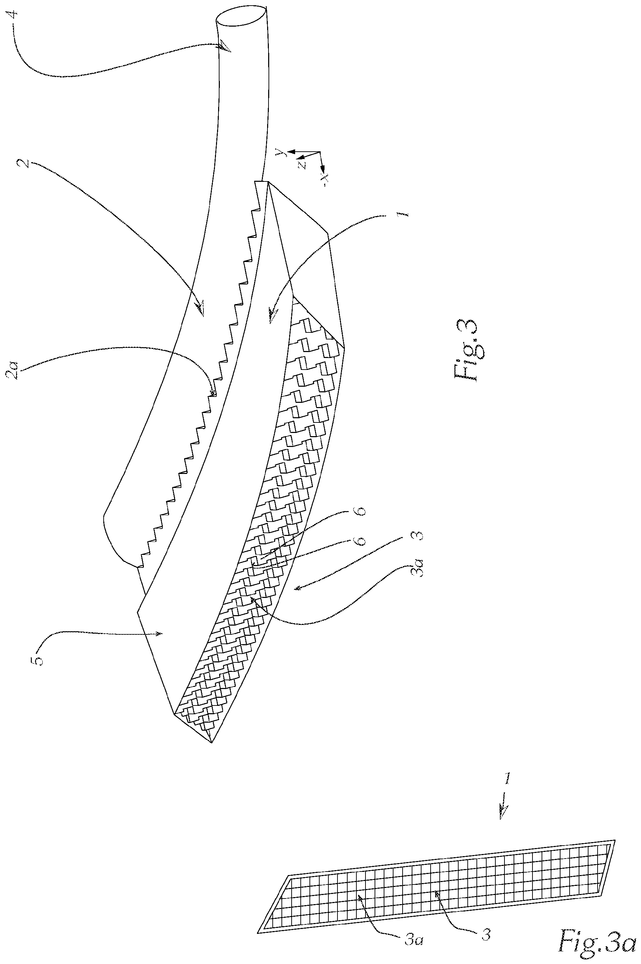

Figur 3 zeigt eine perspektivische Darstellung eines Lichtleitelements 1 gemäß einer zweiten Ausführungsform der Erfindung. Darin ist ein lichteinkoppelndes Element 4 vor dem Lichtkörper 5 des Lichtleitelements 1 angeordnet, wobei die Lichtaustrittsfläche 3 wiederum Austrittsteilflächen 3a aufweist, die in dem gezeigten Beispiel eine etwas komplexere Struktur aufweisen, wobei benachbarte Austrittsteilflächen 3a mittels diagonalen Wandflächen 6 zueinander in Lichtausbreitungsrichtung -x versetzt sind.

Figur 3a zeigt eine Vorderansicht des Lichtleitelements gemäß der zweiten Ausführungsform der Erfindung. Darin ist das Lichtleitelement 1 bzw. der Lichtkörper 5 des Lichtleitelements 1 in einer Vorderansicht dargestellt, die eine Lichtaustrittsflächen 3 zeigt, welche eine Vielzahl einzelner Austrittsteilflächen 3a aufweist, die eine würfelförmige Struktur bilden, indem die Austrittsteilflächen 3a in Zeilen und Spalten angeordnet sind, wobei benachbarte Austrittsteilflächen 3a zueinander versetzt sind.

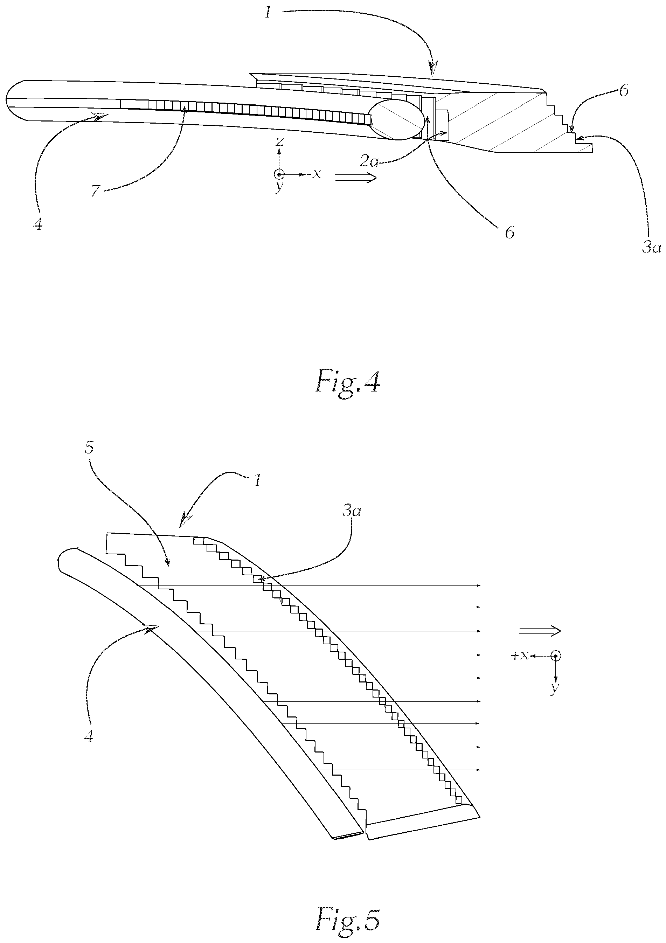

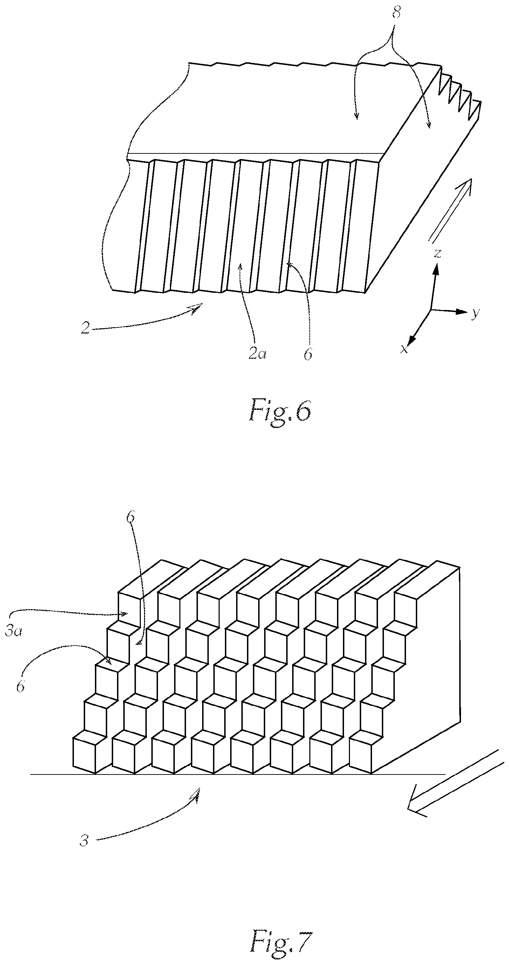

Figur 4 zeigt eine perspektivische Rückansicht eines Lichtleitelements 1 gemäß einer dritten Ausführungsform der Erfindung mit einem vorgeschalteten Leuchtstab 4. In diesem Beispiel sind die Eintrittsteilflächen 2a durch vertikale Wandflächen 6 in Richtung der Lichtausbreitungsrichtung -x zueinander versetzt. Die Austrittsteilflächen 3a sind im Gegensatz dazu sowohl mit horizontal als auch vertikal orientierten Wandflächen 6 zueinander versetzt, wodurch eine würfelartige Struktur geschaffen wird (siehe Fig. 7), mit der eine vertikale als auch horizontale Abschrägung der Lichtaustrittsfläche 3 realisiert wird.

Figur 5 zeigt eine Draufsicht auf ein Lichtleitelement 1 gemäß der dritten Ausführungsform der Erfindung mit einem darin beispielhaft dargestellten Strahlengang der Lichtstrahlen. Figur 6 zeigt einen Ausschnitt der Lichteintrittsfläche 2 des Lichtleitelements 1 gemäß der dritten Ausführungsform der Erfindung. Darin sind die vertikalen Wandabschnitte 6 deutlich erkennbar, mit denen die Eintrittsteilflächen 2a zueinander versetzt sind und damit eine horizontale Abschrägung der Lichteintrittsfläche 2 geschaffen wird. Figur 7 zeigt einen Ausschnitt der Lichtaustrittsfläche 3 des Lichtleitelements 1 gemäß der dritten Ausführungsform der Erfindung, in der die Lichtaustrittsfläche 3 eine stufenförmige Struktur aufweist, indem benachbarte Austrittsteilflächen 3a in der zuvor besagten Weise mittels horizontaler und vertikaler Wandflächen 6 in Richtung der Lichtausbreitungsrichtung -x (bzw. natürlich auch entgegen der Lichtausbreitungsrichtung -x) zueinander versetzt sind, wodurch eine Treppenstruktur gebildet wird, die eine Staffelung in y- und in z- Richtung aufweist. Der Versatz in und entgegen der Lichtausbreitungsrichtung -x kann grundsätzlich frei entsprechend den lichttechnischen Anforderungen gewählt werden. Die Ausrichtung der Wandflächen erfolgt im Wesentlichen parallel zur Lichtausbreitungsrichtung -x In dieser dritten Ausführungsform der Erfindung ist somit jeder Eintrittsteilfläche 2a eine "Spalte" an Lichtaustrittsteilflächen 3a zugeordnet (in der gezeigten Ausführungsform sind jeder Lichteintrittsteilfläche 2a fünf übereinander angeordneter Lichtaustrittsteilflächen 3a zugeordnet).

Fig. 8 zeigt eine Draufsicht auf die Lichteintrittsteilflächen 2a des Lichtleitelements 1 gemäß der dritten Ausführungsform der Erfindung. Darin ist eine Trägerkurve C erkennbar, die durch einen Lichttechniker vorgebbar ist und die die Form des Lichtleitelements 1 maßgeblich bestimmt. Die Wandflächen 6 sind normal zu einer Normalprojektion einer Trägerkurve C orientiert sind, wobei die Normalprojektion der Trägerkurve C in eine in Bezug auf die Lichtausbreitungsrichtung -x normal orientierte Ebene erfolgt. Die Projektionsebene liegt somit in einer durch die Achsen z und y aufgespannten Ebene. Die Trägerkurve C muss nicht zwingend einer Ebene liegen sondern kann grundsätzlich einen beliebigen Verlauf aufweisen.

In Anbetracht dieser Lehre kann die Erfindung beliebiger dem Fachmann bekannter Weise abgeändert werden und ist daher nicht auf die gezeigten Ausführungsformen beschränkt. Auch können einzelne Aspekte der Erfindung bzw. der gezeigten Ausführungsformen aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben.

## Patentansprüche

1. Leuchteinheit, insbesondere Kraftfahrzeugscheinwerfer, mit zumindest einem Lichtleitelement (1) für die Leuchteinheit sowie mit zumindest einem lichteinkoppelnden Element, das als Leuchtstab (4) ausgebildet ist, wobei das Lichtleitelement (1) einen Lichtleitkörper (5) mit zumindest einer Lichteintrittsfläche (2) und zumindest einer Lichtaustrittsfläche (3) umfasst, wobei die zumindest eine Lichteintrittsfläche (2) eine Mehrzahl zumindest in Lichtausbreitungsrichtung (-x) zueinander versetzte Eintrittsteilflächen (2a) aufweist, wobei die Eintrittsteilflächen (2a) im Wesentlichen normal zur Lichtausbreitungsrichtung (-x) orientiert sind, wobei benachbarte Eintrittsteilflächen (2a) aneinander angrenzen, wobei die aneinander angrenzenden Eintrittsteilflächen (2a) mittels parallel zur Lichtausbreitungsrichtung (-x) orientierten Wandflächen (6) zueinander versetzt sind, wobei der Leuchtstab (4) vor der Lichteintrittsfläche (2) angeordnet.

2. Leuchteinheit nach Anspruch 1, wobei benachbarte Eintrittsteilflächen (2a) in Lichtausbreitungsrichtung (-x) zueinander versetzt sind.

3. Leuchteinheit nach Anspruch 1 oder 2, wobei die zumindest eine Lichtaustrittsfläche (3) eine Mehrzahl zumindest in Lichtausbreitungsrichtung (-x) zueinander versetzte Austrittsteilflächen (3a) aufweist, wobei die Austrittssteilflächen (3a) im Wesentlichen normal zur Lichtausbreitungsrichtung (-x) orientiert sind.

4. Leuchteinheit nach Anspruch 3, wobei benachbarte Austrittsteilflächen (3a) aneinander angrenzen.

5. Leuchteinheit nach Anspruch 3 oder 4, wobei benachbarte Austrittsteilflächen (3a) in Lichtausbreitungsrichtung (-x) zueinander versetzt sind.

6. Leuchteinheit nach einem der Ansprüche 3 bis 5, wobei aneinander angrenzende Austrittsteilflächen (3a) mittels parallel zur Lichtausbreitungsrichtung (-x) orientierten Wandflächen (6) zueinander versetzt sind.

7. Leuchteinheit nach Anspruch 1 oder 6, wobei einzelne Wandflächen (6) im Wesentlichen horizontal orientiert sind.

8. Leuchteinheit nach Anspruch 1 oder 6 oder 7, wobei einzelne Wandflächen (6) im Wesentlichen vertikal orientiert sind.

9. Leuchteinheit nach einem der Ansprüche 1 oder 6 bis 8, wobei einzelne Wandflächen (6) im Wesentlichen normal zu einer Normalprojektion einer Trägerkurve (C) orientiert sind, wobei die Normalprojektion der Trägerkurve (C) in eine in Bezug auf die Lichtausbreitungsrichtung (-x) normal orientierte Ebene erfolgt.

10. Leuchteinheit nach einem der Ansprüche 1 oder 6 bis 9, wobei durch die Wandflächen (6) eine würfelförmige Struktur ausgebildet ist.

11. Leuchteinheit einem der Ansprüche 1 oder 6 bis 10, wobei die an dem Übergang der Wandfläche (6) zur Eintritts- und/oder Austrittsteilfläche (2a, 3a) ausgebildete Kanten abgerundet sind, wobei die Abrundung einen Radius zwischen 0,05 und 0,3 mm, vorzugsweise 0,15 mm aufweist.

12. Leuchteinheit nach einem der Ansprüche 3 bis 11, wobei die Austrittsteilflächen (3a) im Wesentlichen parallel zu den Eintrittsteilflächen (2a) orientiert sind.

13. Leuchteinheit nach einem der Ansprüche 1 bis 12, wobei die Eintrittsteilflächen (2a) eine Erstreckung in horizontaler Richtung von maximal 2,5 mm aufweisen, vorzugsweise zwischen 1 mm und 2,5 mm.

14. Leuchteinheit nach einem der Ansprüche 3 bis 13, wobei die Austrittsteilflächen (3a) eine Erstreckung in horizontaler Richtung von maximal 2,5 mm aufweisen, vorzugsweise zwischen 1 mm und 2,5 mm.

15. Leuchteinheit nach einem der Ansprüche 1 bis 14, wobei die Eintrittsteilflächen (2a) eine Erstreckung in vertikaler Richtung von maximal 2,5 mm aufweisen, vorzugsweise zwischen 1 mm und 2,5 mm.

16. Leuchteinheit nach einem der Ansprüche 3 bis 15, wobei die Austrittsteilflächen (3a) eine Erstreckung in vertikaler Richtung von maximal 2,5 mm aufweisen, vorzugsweise zwischen 1 mm und 2,5 mm.

17. Leuchteinheit nach einem der Ansprüche 1 bis 16, wobei der Lichtkörper (5) als Vollkörper ausgeführt ist.

18. Leuchteinheit nach einem der Ansprüche 1 bis 17, wobei der Lichtkörper (5) aus Polycarbonat und/oder Polymethylmethacrylat besteht.

19. Kraftfahrzeug mit zumindest einer Leuchteinheit nach einem der vorhergehenden Ansprüche.

## Claims

1. An illumination unit, in particular a motor vehicle headlight, with at least one light-guiding element (1) for the illumination unit as well as with at least one light-coupling element, which is configured as an illumination rod (4), wherein the light-guiding element (1) comprises a light-guiding body (5) with at least one light inlet area (2) and at least one light outlet area (3), wherein the at least one light inlet area (2) has a plurality of inlet subareas (2a) that are offset with respect to one another at least in the direction of light propagation (-x), wherein the inlet subareas (2a) are oriented substantially normally to the direction of light propagation (-x), wherein adjacent inlet subareas (2a) border one another, wherein the inlet subareas (2a) bordering one another are offset in relation to one another by means of wall areas (6) oriented parallel to the direction of light propagation (-x), wherein the illumination rod (4) is arranged before the light inlet area (2).

2. The illumination unit according to claim 1, wherein adjacent inlet subareas (2a) are offset in relation to one another in the direction of light propagation (-x).

3. The illumination unit according to claim 1 or 2, wherein the at least one light outlet area (3) has a plurality of outlet subareas (3a) offset in relation to one another at least in the direction of light propagation (-x), wherein the outlet sub-areas (3a) are oriented substantially normally to the direction of light propagation (-x).

4. The illumination unit according to claim 3, wherein adjacent outlet subareas (3a) border one another.

5. The illumination unit according to claim 3 or 4, wherein adjacent outlet subareas (3a) are offset in relation to one another in the direction of light propagation (-x).

6. The illumination unit according to claims 3 to 5, wherein outlet subareas (3a) bordering one another are offset in relation to one another by means of wall areas (6) oriented parallel to the direction of light propagation (-x).

7. The illumination unit according to claim 1 or 6, wherein individual wall areas (6) are oriented substantially horizontally.

8. The illumination unit according to claim 1 or 6 or 7, wherein individual wall areas (6) are oriented substantially vertically.

9. The illumination unit according to claims 1 or 6 to 8, wherein individual wall areas (6) are oriented essentially normally to a normal projection of a medium curve (C), wherein the normal projection of the medium curve (C) occurs in a plane oriented normally in relation to the direction of light propagation (-x).

10. The illumination unit according to one of claims 1 or 6 to 9, wherein a cube-shaped structured is formed by the wall areas (6).

11. The illumination unit according to one of claims 1 or 6 to 10, wherein the edges formed at the transition of the wall area (6) to the inlet and/or outlet subarea (2a, 3a) are rounded, wherein this rounding has a radius between 0.05 and 0.3 mm, preferably 0.15 mm.

12. The illumination unit according to one of claims 3 to 11, wherein the outlet subareas (3a) are oriented essentially parallel to the inlet subareas (2a).

13. The illumination unit according to one of claims 1 to 12, wherein die inlet subareas (2a) have a maximum extension in a horizontal direction of 2.5 mm, preferably between 1 mm and 2.5 mm.

14. The illumination unit according to one of claims 3 to 13, wherein die outlet subareas (3a) have a maximum extension in a horizontal direction of 2.5 mm, preferably between 1 mm and 2.5 mm.

15. The illumination unit according to one of claims 1 to 14, wherein die inlet subareas (2a) have a maximum extension in a vertical direction of 2.5 mm, preferably between 1 mm and 2.5 mm.

16. The illumination unit according to one of claims 3 to 15, wherein die outlet subareas (3a) have a maximum extension in a horizontal direction of 2.5 mm, preferably between 1 mm and 2.5 mm.

17. The illumination unit according to one of claims 1 to 16, wherein the light body (5) is configured as a solid body.

18. The illumination unit according to one of claims 1 to 17, wherein the light body (5) consists of polycarbonate and/or polymethylmethacrylate.

19. A motor vehicle with at least one illumination unit according to one of the preceding claims.

## Revendications

1. Unité d'éclairage, notamment phare de véhicule automobile, avec au moins un élément guide de lumière (1) pour l'unité d'éclairage ainsi qu'avec au moins un élément injectant de la lumière, qui est constitué comme une barre lumineuse (4), sachant que l'élément guide de lumière (1) comprend un corps conducteur de lumière (5) avec au moins une surface d'entrée de lumière (2) et au moins une surface de sortie de lumière (3), sachant qu'au moins une surface d'entrée de lumière (2) comporte une pluralité de parties de surface d'entrée (2a) décalées les unes par rapport aux autres au moins en direction de la propagation de la lumière (-x), sachant que les parties de surface d'entrée (2a) sont orientées pour l'essentiel normalement par rapport à la direction de propagation de la lumière (-x), sachant les parties de surface d'entrée (2a) sont adjacentes, sachant que les parties de surface d'entrée (2a) adjacentes sont décalées les unes par rapport aux autres au moyen des surfaces de paroi (6) orientées parallèlement à la direction de propagation de la lumière (-x), sachant que la barre lumineuse (4) est disposée avant la surface d'entrée de la lumière (2).

2. Unité d'éclairage selon la revendication 1, sachant que les parties de surface d'entrée voisines (2a) sont décalées les uns par rapport aux autres dans la direction de propagation de la lumière (-x).

3. Unité d'éclairage selon la revendication 1 ou 2, sachant qu'au moins une surface de sortie de la lumière (3) comporte une pluralité de parties de surface de sortie (3a) décalées les uns par rapport aux autres au moins dans la direction de propagation de la lumière (-x), sachant que les parties de surface de sortie (3a) sont pour l'essentiel orientées normalement à la direction de propagation de la lumière (-x).

4. Unité d'éclairage selon la revendication 3, sachant que les parties de surface de sortie voisines (3a) sont adjacentes.

5. Unité d'éclairage selon la revendication 3 ou 4, sachant que les parties de surface de sortie voisines (3a) sont décalées les unes par rapport aux autres dans la direction de propagation de la lumière (-x).

6. Unité d'éclairage selon l'une quelconque des revendications 3 à 5, sachant que les parties de surface de sortie adjacentes (3a) sont décalées les unes par rapport aux autres au moyen des surfaces de paroi (6) orientées parallèlement à la direction de propagation de la lumière (-x).

7. Unité d'éclairage selon la revendication 1 ou 6, sachant que les surfaces de paroi individuelles (6) sont pour l'essentiel orientées horizontalement.

8. Unité d'éclairage selon la revendication 1 ou 6 ou 7, sachant que les surfaces de paroi individuelles (6) sont pour l'essentiel orientées verticalement.

9. Unité d'éclairage selon l'une quelconque des revendications 1 ou 6 à 8, sachant que les surfaces de paroi individuelles (6) sont pour l'essentiel orientées normalement par rapport à une projection normale d'une courbe porteuse (C), sachant que la projection normale de la courbe porteuse (C) a lieu dans un plan normalement orienté par rapport à la direction de propagation de la lumière (-x).

10. Unité d'éclairage selon l'une quelconque des revendications 1 ou 6 à 9, sachant qu'une structure de forme cubique est constituée par les surfaces de paroi (6) .

11. Unité d'éclairage selon l'une quelconque des revendications 1 ou 6 à 10, sachant que les bords constitués à la transition de la surface de paroi (6) et des parties de surface d'entrée et de sortie (2a, 3a) sont arrondis, sachant que l'arrondi comporte un rayon se situant entre 0,05 et 0,3 mm, de préférence 0,15 mm.

12. Unité d'éclairage selon l'une quelconque des revendications 3 à 11, sachant que les parties de surface de sortie (3a) sont orientées pour l'essentiel parallèlement aux parties de surface d'entrée (2a).

13. Unité d'éclairage selon l'une quelconque des revendications 1 à 12, sachant que les parties de surface d'entrée (2a) comportent une extension en direction horizontale d'un maximum de 2,5 mm, de préférence entre 1 mm et 2,5 mm.

14. Unité d'éclairage selon l'une quelconque des revendications 3 à 13, sachant que les parties de surface de sortie (3a) comportent une extension en direction horizontale d'un maximum de 2,5 mm, de préférence entre 1 mm et 2,5 mm.

15. Unité d'éclairage selon l'une quelconque des revendications 1 à 14, sachant que les parties de surface d'entrée (2a) comportent une extension en direction verticale d'un maximum de 2,5 mm, de préférence entre 1 mm et 2,5 mm.

16. Unité d'éclairage selon l'une quelconque des revendications 3 à 15, sachant que les parties de surface de sortie (3a) comportent une extension en direction verticale d'un maximum de 2,5 mm, de préférence entre 1 mm et 2,5 mm.

17. Unité d'éclairage selon l'une quelconque des revendications 1 à 16, sachant que le corps lumineux (5) est exécuté en tant que corps plein.

18. Unité d'éclairage selon l'une quelconque des revendication 1 à 17, sachant que le corps lumineux (5) sont en polycarbonate et/ou polyméthylméthacrylate.

19. Véhicule automobile avec au moins une unité d'éclairage selon l'une quelconque des revendications précédentes.
